# EUROPÄISCHE PATENTANMELDUNG

(11) **EP 4 410 626 A2**
(43) Veröffentlichungstag der Anmeldung: **07.08.2024**
(21) Anmeldenummer: 24177870.3
(22) Anmeldetag: 13.05.2020
(51) Int. Cl.: B60W 50/14

(54) **VERFAHREN ZUM ANZEIGEN UND/ODER BERECHNEN EINER RELATIVBEWEGUNG**

(30) Priorität: 14.05.2019 DE 102019112625; 10.03.2020 AT 501992020
(62) Teilanmeldung aus: 20727176.8
(71) Anmelder: EYYES GmbH, 3494 Gedersdorf (AT)
(72) Erfinder: TRAXLER, Johannes, 3500 Imbach (AT)
(74) Vertreter: Burgstaller, Peter

(57) **Zusammenfassung**

Verfahren zum Anzeigen und/oder Berechnen einer Relativbewegung eines zweiten bewegten Objektes (21) zu einem ersten bewegten Objekt (20),
wobei aus einer abgelaufenen ersten Positionsänderung (10) eine zukünftige erste Positionsänderung (14) des ersten Objektes (20) berechnet wird, und wobei
aus einer abgelaufenen zweiten Relativpositionsänderung (11) eine zukünftige zweite Relativpositionsänderung (12) des zweiten Objektes (20) berechnet wird,
welche zukünftige erste Positionsänderung (14) mit der zukünftigen zweiten Relativpositionsänderung (14) verglichen wird.

## Beschreibung

Die hier offenbarte Erfindung betrifft ein Verfahren nach dem Oberbegriff des Anspruches 1.

Es wird hierbei das erste Objekt in eine erste Positionsänderung mit einer ersten Objektgeschwindigkeit bewegt und das zweite Objekt in eine zweite Relativpositionsänderung mit einer zweiten Objektgeschwindigkeit bewegt. Die erste Objektgeschwindigkeit kann einen von Null unterschiedlichen Wert oder den Wert Null aufweisen. Die zweite Objektgeschwindigkeit kann Null betragen oder einen von Null unterschiedlichen Wert aufweisen. Allenfalls kann sich das erste Objekt dem zweiten Objekt oder umgekehrt nähern.

Im Rahmen der Offenbarung der Erfindung kann der Begriff "Objekt" eine Person und/oder ein Objekt wie ein Fahrzeug betreffen, welches Objekt von einer Person gesteuert wird.

Das erste Objekt und das zweite Objekt können im Rahmen dieser Erfindung beispielsweise eine Sportart ausübende Sportler sein, wobei die ausgeübte Sportart im Rahmen der Offenbarung als solche keine wesentliche Bedeutung hat. Es ist vielmehr entscheidend, dass der Sportler bei der Ausübung der Sportart sich nur schlecht einen Überblick über seine Umgebung verschaffen kann. Dies kann damit begründet sein, dass die jeweilige Sportart bei unter anderem höheren Bewegungsgeschwindigkeiten des Sportlers ausgeführt wird und/oder der Sportler auf die Durchführung seiner Bewegung konzentriert sein muss.

Der Sportler kann beispielsweise ein Skifahrer sein. Skifahren wird im Normalfall bei hohen Geschwindigkeiten ausgeführt. Der Skifahrer konzentriert sich im Regelfall auf die Durchführung seiner Bewegungen, welche Bewegungen im Wechselspiel mit der natürlich ausgeformten Piste als Untergrund stehen, und kann sich nur schwer einen Überblick über seine Umgebung machen. Oft passieren Skiunfälle, bei welchen Skiunfällen ein Skifahrer von einem weiteren, von einem von hinten oder von oben kommenden Skifahrer gerammt wird.

Der Sportler kann beispielsweise ein Radfahrer sein. Radfahren, insbesondere Radrennfahren wird bei hohen Geschwindigkeiten ausgeführt. Bei Radrennen kommt es oft vor, dass bei einem Zielsprint Unfälle geschehen, da sich die Radrennfahrer auf die Ausübung ihrer Bewegung - des Sprints - konzentrieren und unter anderem wegen ihrer üblichen Haltung mit dem Gesicht nach unten sich keinen Überblick über ihre Umgebung machen können.

Ein Skifahrer oder ein Radfahrer trägt üblicher Weise bei der Ausübung seines Sportes einen Helm. Nach dem Stand der Technik kann ein Helm auch Anzeigevorrichtungen umfassen, mittels welchen Anzeigevorrichtungen dem Sportler Informationen übermittelt werden. Beispielsweise sind Helme nach dem Stand der Technik bekannt, bei welchen Helmen dem Sportler auf einem Visier als Teil des Helmes Informationen angezeigt werden. Die im Rahmen der Durchführung des erfindungsgemäßen Verfahrens ermittelten Informationen können beispielsweise auf einem solchen Visier angezeigt werden.

Das erste Objekt kann beispielsweise ein Lastkraftwagen, ein Geländewagen oder ein Bus sein, welcher von einer Person oder durch einen Computer gesteuert wird. Das zweite Objekt kann ein Auto, ein Fahrrad oder ein Motorrad sein, welches zweite Objekt von einer Person gesteuert wird. Insbesondere, wenn das erste Objekt deutlich größer als das zweite Objekt ist oder die Gestaltung des ersten Objektes der das erste Objekt steuernde Person nur eine schlechte Sicht auf die Umgebung bietet, kann der Lenker des ersten Objektes das zweite Objekt leicht übersehen.

Ein Lastkraftwagen, ein Geländewagen oder ein Bus haben im Regelfall eine Vielzahl von Informationsanzeigevorrichtungen zum Anzeigen von Informationen über den Zustand des Objektes und/oder über den Zustand der Umgebung des Objektes. Ein Lastkraftwagen et cetera kann weiters Rückspiegel aufweisen, welche als Informationsanzeigevorrichtungen einen Überblick über die Umgebung bieten und welche auch zum Anzeigen weiterer Informationen geeignet sind. Die im Rahmen der Durchführung des erfindungsgemäßen Verfahrens ermittelten Informationen können auf diesen Informationsanzeigevorrichtungen angezeigt werden.

Es kann auch das erste Objekt ein Motorrad oder dergleichen sein, während das zweite Objekt ein Automobil ist.

Die erste Position und somit die ersten Positionsänderung kann beispielsweise mittels GPS-Messverfahren bestimmt werden. Die erste Position und somit die ersten Positionsänderung kann mittels einer Kamera ermittelt werden. Für eine verlässliche Bestimmung der Positionsänderung und/oder der Geschwindigkeit und/oder der Beschleunigung sind üblicher Weise bei einer Betrachtung einer ausschließlich in einer Ebene verlaufenden Bewegung zwei Positionswerte oder bei einer Betrachtung einer in einem Raum verlaufenden Bewegung drei Positionswerte erforderlich.

Ergänzend oder alternativ zu der oben beschriebenen Ermittlung der ersten Positionsänderungen können die ersten Positionsänderungen aus den ersten Objektsteuerungsdaten wie beispielsweise Telemetriedaten eines Fahrzeuges oder aus der Gleisführung einer Eisenbahn ermittelt werden. Es kommen hierbei Verfahren nach dem Stand der Technik zum Einsatz, welche Verfahren nach dem Stand der Technik im Rahmen der Offenbarung der Erfindung nicht weiter zu beschreiben sind.

Die oben beschriebene Ermittlung der ersten Positionsänderung kann durch einen Abgleich mit weiteren relevanten Daten des ersten Objektes wie Daten aus einem Navigationssystem verifiziert und/oder ergänzt werden.

Es ist zumindest eine erste Kamera mit einem ersten Kamerafeld auf dem ersten Objekt angeordnet. Der Fachmann ist in der Lage, das erste Kamerafeld so zu orientieren, dass durch das erste Kamerafeld jener Bereich aufgenommen werden kann, in welchem Bereich sich zweite Objekte bewegen, welche zweite Objekte mit dem ersten Objekt kollidieren können. Mittels der ersten Kamera werden die zweiten Relativbewegungen des zweiten Objektes zum ersten Objekt aufgenommen.

Die Kamera kann beispielsweise an einer Objektseite des ersten Objektes angeordnet sein, welche Objektseite benachbart zu einem zu mit der Kamera zu einem überwachenden Bereich ist. Die Kamera kann weiters in einem Rückspiel oder in einem Helm integriert sein.

Es kann mit Hilfe der Kamera unter Anwendung von Verfahren nach dem Stand der Technik die Relativposition des zweiten Objektes zum ersten Objekt zu einem Zeitpunkt ermittelt werden.

Es kann mit Hilfe der Kamera auch das zweite Objekt mittels zumindest eines Bildes und/oder mittels eines Videos aufgenommen werden, welches Bild beziehungsweise welches Video nach der gängigen Lehre weiter verarbeitbar ist.

Verfahren nach dem Stand der Technik erlauben die Bestimmung einer Trajektorie eines in einem globalen Koordinatensystem bewegten Objektes zu einer in einem globalen Koordinatensystem nicht bewegten Kamera. Das im Folgenden offenbarte Verfahren kann auch diese nach dem Stand der Technik bekannten Verfahren zur Bestimmung einer Trajektorie verwenden, wobei die Relativtrajektorie oder - wie im Rahmen der Offenbarung der Erfindung genannt - die Relativpositionsänderung eines in einem globalen Koordinatensystem und relativ zu einem ersten Objekt bewegten zweiten Objektes aus den Bilddaten der ersten Kamera ermittelt wird. Für eine verlässliche Bestimmung der Relativpositionsänderung und/oder Relativgeschwindigkeit und/oder Relativbeschleunigung sind üblicher Weise bei einer Betrachtung einer ausschließlich in einer Ebene verlaufenden Bewegung zwei Positionswerte oder bei einer Betrachtung einer in einem Raum verlaufenden Bewegung drei Positionswerte erforderlich.

Der Zeitpunkt Tv sei im Rahmen der Offenbarung der Erfindung jener Zeitpunkt, zu welchem Zeitpunkt Tv das erfindungsgemäße Verfahren durchgeführt wird. Bei einer Durchführung des erfindungsgemäßen Verfahrens über eine Zeitspanne wird das erfindungsgemäße Verfahren zu einer Vielzahl von Zeitpunkten Tv innerhalb dieser Zeitspanne ausgeführt.

Der Zeitpunkt t1 ... n und der Zeitpunkt t1 ... m mit m und n als eine natürliche Zahl seien im Rahmen der Offenbarung der Erfindung Zeitpunkte zeitlich vor Tv. Der Zeitpunkt T1... n und der Zeitpunkt T1... m mit m und n als eine natürliche Zahl seien im Rahmen der Offenbarung der Erfindung Zeitpunkte zeitlich nach Tv. Im Rahmen der Offenbarung der Erfindung wird ein klein geschriebenes t zur Kennzeichnung eines Zeitpunktes vor dem Zeitpunkt Tv verwendet. Ein groß geschriebenes T wird zur Kennzeichnung eines Zeitpunktes nach dem Zeitpunkt T verwendet.

Verfahren nach dem Stand der Technik wie beispielsweise DE10030421 sind darauf beschränkt, dass zu einem Zeitpunkt Tv aus zumindest zwei Relativpositionen des Objektes eine abgelaufene Relativpositionsänderung des zweiten Objektes ermittelt wird. Es wird aus der abgelaufenen Relativpositionsänderung des zweiten Objektes eine zukünftige Relativpositionsänderung des zweiten Objektes zu zumindest einem Zeitpunkt T1... Tn berechnet. Die Berechnung erfolgt nach dem Stand der Technik unter der Annahme der Fortsetzung der abgelaufenen Relativpositionsänderung zu den Zeitpunkten t1...tn in der zukünftigen Relativpositionsänderung zu den Zeitpunkten T1... Tn. Mit anderen Worten wird angenommen, dass im globalen Koordinatensystem gesehen das erste Objekt und das zweite Objekt ihre vor dem Zeitpunkt Tv durchgeführten Bewegungen im Wesentlichen ohne Relativpositionsänderungsänderungen nach dem Zeitpunkt Tv fortsetzen, sodass die Relativbewegung des zweiten Objektes zum ersten Objekt unverändert bleibt.

Es wird sohin nach dem Stand der Technik angenommen, dass sich ein Objekt, welches Objekt zu den Zeitpunkten t1..n entlang einer Gerade bewegt wird, zu den Zeitpunkten T1... n ebenso entlang einer Geraden bewegt wird. Bei einem Objekt, welches Objekt zu den Zeitpunkten t1...n entlang einer Kurve bewegt wird, kann angenommen werden, dass das Objekt zu den Zeitpunkten T1...n unter Fortsetzung der Kurve bewegt wird.

Eine Überlagerung der Relativpositionsänderungen ist eine mathematische Beschreibung einer Kollision des ersten Objektes und des zweiten Objektes zu einem Zeitpunkt Tk. Eine Kollision tritt auf, wenn sich ein erster Vektor beschreibend eine erste Positionsänderung und ein zweiter Vektor beschreibend ein zweite Relativpositionsänderung zu dem Zeitpunkt Tk schneiden.

Es ist das in DE10030421 beschriebene Verfahren keinesfalls dazu geeignet, eine mögliche Kollision in einem Bereich vorherzusagen, in welchem Bereich ein Objekt eine Richtungsänderung vornimmt. Das in DE10030421 offenbarte Verfahren ist nicht für eine Kreuzungsbereich einsetzbar.

JPH0660300 und EP0582236 offenbaren ein Verfahren zum Erkennen einer Kollision mittels einer Bildanalyse unter der Anwendung von KI. Es ist in diesem Dokument nicht die Analyse der Bewegungen unter Errechnung von Relativpositionsänderungen erwähnt.

Das in US2005016550 beschriebene Verfahren basiert auf der Analyse von Bewegungspfaden und nicht von Bewegungsbereichen.

WO2017177088 offenbart ein auf neuronalen Netzen basierendes Verfahren, bei welchem Verfahren Szenenbilder analysiert werden.

Es findet sich in CN108725440 und JP2019053377 kein Hinweis auf die Betrachtung einer Relativpositionsänderung des zweiten Objektes und eines Bewegungsbereiches beschreibend die möglichen Relativpositionsänderungen des zweiten Objektes.

Der Fachmann erkennt, dass bei dem beispielsweise in DE10030421 offenbarten Verfahren die Wiederholungszeitabstände hinreichend klein gewählt werden müssen, damit die oben beschriebene Annahme der unveränderten Fortsetzung der Bewegungen des ersten Objektes und des zweiten Objektes keine zu große Abweichung von den tatsächlichen Bewegungen der Objekte beziehungsweise von der tatsächlichen Relativpositionsänderung des zweiten Objektes zum ersten Objekt mit sich bringt. Die Wiederholungszeitabstände sind in Abhängigkeit der Geschwindigkeiten der Objekte und des Abstandes zwischen den Objekten zu wählen, um eine hinreichend genaue Beschreibung der Bewegung eines Objektes zu ermöglichen und um eine eventuelle Richtungsänderung zu bemerken.

DE102014008897 offenbart ein Verfahren, bei welchem Verfahren die (Relativ)Bewegungsdaten des zweiten Objektes mittels einer am zweiten Objekt installierten Messvorrichtung erfasst und an das erste Objekt übermittelt werden (DE102014008897[0006]). Weiters werden die Positionsdaten des zweiten Objektes durch am ersten Objekt installierte Messvorrichtungen erfasst (DE102014008897[0007]). Das in DE102014008897 offenbarte Verfahren ist auf die Betrachtung von einzelnen Trajektorien (siehe u.a. DE102014008897[0009]) und auf die Prognose von Trajektorien beschränkt. Letzteres wird insbesondere in der Figurenbeschreibung zu Figur 2 in DE102014008897[0039]-[0042] erläutert.

Die Wiederholungszeitabstände können durch die Bildrate der Kamera vorgegeben sein. Im Umkehrschluss erfordern hohe Wiederholungsabstände eine hohe Bildrate der Kamera, weshalb nicht jede Kamera nach dem Stand der Technik für das oben beschriebene Verfahren einsetzbar ist.

In der Realität folgt ein bewegtes Objekt nicht nur einer gemäß Offenbarung nach dem Stand der Technik errechneten Relativpositionsänderung. Die Bewegung eines Objektes kann durch eine Steuerung einer Person und/oder durch äußere Einflüsse verändert werden.

Das erfindungsgemäße Verfahren stellt sich die Aufgabe, die möglichen Bewegungen zur Vorhersage einer Kollision zwischen dem ersten Objekt und dem zweiten Objekt zu berücksichtigen.

Das erfindungsgemäße Verfahren stellt sich die weitere unabhängige Aufgabe, die Anforderungen an die Kamera zu reduzieren.

Erfindungsgemäß wird dies dadurch erreicht, dass
die abgelaufene zweite Relativpositionsänderung des zweiten Objektes und/oder das die Eigenschaft des zweiten Objektes klassifiziert wird, wobei
der zukünftige zweite Relativbewegungsbereich unter Berücksichtigung der durch die Klassifizierung der Relativpositionsänderung zugewiesenen Eigenschaften der zukünftigen Relativpositionsänderung beziehungsweise der durch die Klassifizierung des zweiten Objektes zugewiesenen zweiten Eigenschaften des zweiten Objektes festgelegt wird.

Der zweite Relativbewegungsbereich wird in Abhängigkeit der durch die Klassifizierung der abgelaufenen zweiten Relativpositionsänderung zugewiesenen Eigenschaften der zukünftigen Relativpositionsänderung beziehungsweise der durch die Klassifizierung des zweiten Objektes zugewiesenen zweiten Eigenschaften des zweiten Objektes festgelegt.

Das erfindungsgemäße Verfahren kann sich dadurch auszeichnen, dass eine Ähnlichkeit der abgelaufenen zweiten Relativpositionsänderung und der zukünftigen zweiten Relativpositionsänderung berücksichtigt wird. Im Unterschied zu Verfahren nach dem Stand der Technik, welche davon ausgehen, dass die zukünftige zweite Relativpositionsänderung die Fortsetzung der abgelaufenen zweiten Relativpositionsänderung, d.h. die vektorielle Darstellung der zweiten Relativpositionsänderungen parallel sind, wird bei der Durchführung des erfindungsgemäßen Verfahrens lediglich eine Ähnlichkeit angenommen. Das erfindungsgemäße Verfahren zeichnet sich sohin dadurch aus, dass im Unterschied zu den Verfahren nach dem Stand der Technik auch Änderungen der zweiten Relativpositionsänderung berücksichtigt werden. Das erfindungsgemäße Verfahren kann sich insbesondere dadurch auszeichnen, dass Änderungen der zweiten Relativpositionsänderungen in Abhängigkeit der Wahrscheinlichkeit des Auftretens der zweiten Relativpositionsänderungen berücksichtigt werden. Die Wahrscheinlichkeit einer Änderung der zweiten Relativpositionsänderung kann in Abhängigkeit der Klassifizierung der Objekte und/oder der Position der Objekte durchgeführt werden.

Das erfindungsgemäße Verfahren kann sohin darauf basieren, dass auf Basis einer Klassifizierung der vergangenen zweiten Relativpositionsänderung des zweiten Objektes ein zweiter Relativbewegungsbereich definiert wird, in welchem zweiten Relativbewegungsbereich die zukünftige Relativpositionsänderung - anzunehmender Weise - sattfinden wird.

Auf Basis der Klassifizierung der vergangenen Relativbewegungsänderung kann sohin eine zukünftiger Relativpositionsänderung mit einer bestimmten Wahrscheinlichkeit unter Anwendung gängiger Methoden und Modelle ermittelt werden. Der Relativbewegungsbereich kann als ein zumindest jene zukünftige Relativpositionsänderungen umfassender Bereich definiert werden, welche Relativpositionsänderung mit einer definierten Wahrscheinlichkeit auftreten werden. Der Fachmann kann einen hierzu benötigten Wahrscheinlichkeitsgrenzwert gegebenenfalls unter Berücksichtigung der jeweiligen Anwendung des erfindungsgemäßen Verfahrens festlegen.

Es wird die vergangene zweite Relativpositionsänderung nach der gängigen Lehre mit einer Datenbank abgeglichen, in welcher Datenbank abgelaufene Relativpositionsänderungen und zukünftige Relativpositionsänderungen hinterlegt sind. Durch einen Abgleich der vergangenen Relativpositionsänderung mit der in der Datenbank abgespeicherten vergangenen Relativpositionsänderungen und gegebenenfalls Bestimmung von Ähnlichkeiten wird eine Eigenschaft der zukünftigen Relativpositionsänderung zugewiesen. Die Eigenschaft der zukünftigen Relativpositionsänderung kann eine Geschwindigkeitseigenschaft und/oder eine zukünftige Richtung der Relativpositionsänderung umfassen.

Das zweite Objekt wird mit der ersten Kamera aufgenommen, welche erste Kamera Bilddaten liefert, wobei nach Verfahren nach dem Stand der Technik das zweite Objekt sowie Eigenschaften des zweiten Objektes extrahiert werden können. Wegen der vorgenommenen Klassifizierung des zweiten Objektes ist im Unterschied zu Verfahren nach dem Stand der Technik keine hohe Bildrate der Kamera erforderlich. Im Prinzip reichen einige wenige Bilder aus, um mittels der Klassifizierung der abgelaufenen Relativpositionsänderung die zukünftige Relativpositionsänderung zu bestimmen. Der Fachmann erkennt, dass die erforderliche Anzahl der Bilder von der erforderlichen Genauigkeit der Abschätzung der zukünftigen Relativpositionsänderung und/oder der Möglichkeit der hinreichend genauen Klassifizierung der abgelaufenen Relativpositionsänderung oder kurz erläutert von dem Umfang der Datenbank abhängt.

Die hier offenbarte Erfindung zeichnet sich sohin dadurch aus, dass die bei Verfahren nach dem Stand der Technik erforderlich hohe Anzahl von Bildern oder Messwerten durch die Verwendung einer Datenbank reduziert wird, wodurch das erfindungsgemäße Verfahren in einer sehr effizienten Weise durchführbar ist. Das erfindungsgemäße Verfahren ist insbesondere vorteilhaft zu Verfahren nach dem Stand der Technik, zumal nur ein Bruchteil der aufgenommenen Bilder oder Messwerte zur Durchführung der Verfahren nach dem Stand der Technik oder des erfindungsgemäßen Verfahrens geeignet sind und diese Bilder oder Messwerte insbesondere Störungen unterworfen sind. Mit anderen Worten ist die mögliche Durchführung der Verfahren nach dem Stand der Technik anzuzweifeln, da die nach dem Stand der Technik bekannten Systeme zur Aufnahme der Bilder oder Messwerte nicht die Anzahl der erforderlichen Bilder oder Messwerte liefern können oder dies nur in einer sehr aufwendigen Weise möglich ist.

Es sind insbesondere die bei Kraftfahrzeugen verwendeten Kameras nicht in der Lage, eine derart hohe Bildrate mit einer ausreichenden Qualität zu liefern, sodass die Verfahren nach dem Stand der Technik durchführbar sind. Das erfindungsgemäße Verfahren kann sich dadurch auszeichnen, dass die nach dem Stand der Technik bei Kraftfahrzeugen eingesetzten Kameras zur Durchführung des erfindungsgemäßen Verfahrens einsetzbar sind, da die Durchführung des erfindungsgemäßen Verfahrens wegen der Klassifizierung der Objekte keine hohe Bildrate bedingt.

Bei einer Versuchsanlage wird eine Kamera nach dem Stand der Technik mit einer Bildrate von 30 frames/Sekunde verwendet. Das erfindungsgemäße Verfahren zeichnet sich dadurch aus, dass eine Kamera oder mehrere Kameras mit einer niedrigen Bildrate ausreichend sind, da nicht nur eine Bewegung, sondern Bewegungsbereiche umfassend die möglichen Bewegungen betrachtet werden. Es sind auch eine Umsetzung des erfindungsgemäßen Verfahrens mit einer Kamera mit einer kleineren Bildrate als 30 frames/Sekunde denkbar.

Das erfindungsgemäße Verfahren zeichnet sich dadurch aus, dass nur wenige Bilder zur Durchführung des erfindungsgemäßen Verfahrens erforderlich sind. Es sind - wie im Rahmen der Offenbarung des erfindungsgemäßen Verfahrens hinreichend genau dargestellt - nur wenige Relativpositionen zu Ermittlung der abgelaufenen Relativpositionsänderung des zweiten Objektes erforderlich. Das erfindungsgemäße Verfahren kann einschließen, dass eine Relativtrajektorie beschreibend eine zweite Relativpositionsänderung des zweiten Objektes zum ersten Objekt ermittelt wird, jedoch ist dies nicht unbedingt erforderlich.

Das erfindungsgemäße Verfahren zeichnet sich sohin durch einen effizienten Umgang mit den gemessenen Daten wie Positionen, Relativposition und den hieraus ermittelten Daten wie Positionsänderung, Relativpositionsänderung aus.

Das erfindungsgemäße Verfahren kann ergänzend zu obiger Beschreibung oder alternativ hierzu umfassen, dass der zukünftigen Relativpositionsänderung auf Basis einer Klassifizierung des zweiten Objektes Eigenschaften zugewiesen werden können. Die Eigenschaften der zukünftigen Relativpositionsänderung können wiederum eine Geschwindigkeitseigenschaft und/oder eine zukünftige Richtung der Relativpositionsänderung umfassen.

Es können die Eigenschaften des zweiten Objektes mit einer Datenbank abgeglichen werden, in welcher weitere Eigenschaften des zweiten Objektes wie die Größe des zweiten Relativbewegungsbereiches hinterlegt sind. Es können hierbei Verfahren nach dem Stand der Technik zur Klassifizierung des zweiten Objektes zur Anwendung kommen.

Der zweite Relativbewegungsbereich oder die Größe des zweiten Relativbewegungsbereiches kann beispielsweise hinreichend genau mit einem Winkel beschrieben werden, wie dies in den nachstehenden Figuren beispielhaft erfolgt.

Die oben erwähnten Datenbanken umfassen beispielsweise eine Winkelangabe von 20° für einen Fahrradfahrer und 1° für ein Auto. Diese hier beispielhaft angeführten Winkelangaben zur Bestimmung des Relativbewegungsbereiches tragen dem Umstand Rechnung, dass ein Fahrradfahrer bei einer Geradeausfahrt üblicher Weise schlangenförmig fährt, während ein Auto üblicher Weise einer eher geraden Linie folgt.

Die Datenbank kann auch umfassen, dass die Eigenschaften der zukünftigen Relativpositionsänderung in Abhängigkeit der Position des ersten Objektes und/oder des zweiten Objektes definiert werden. So kann beispielsweise dem Zustand und/oder dem Verlauf der Straße Rechnung getragen werden.

Das erfindungsgemäße Verfahren kann umfassen, dass
das erste Objekt klassifiziert und der erste Bewegungsbereich unter Berücksichtigung der durch die Klassifikation des ersten Objektes zugewiesenen ersten Eigenschaften des ersten Objektes festgelegt wird.

Der erste Bewegungsbereich kann beispielsweise durch einen Winkel beschrieben werden.

Der erste Bewegungsbereich kann weiters als ein Bereich definiert sein, welcher Bereich die mit einer gewissen Wahrscheinlichkeit auftretenden zukünftigen ersten Positionsänderungen umfassender Bereich definiert sein. Der Fachmann kann hierzu einen Wahrscheinlichkeitsgrenzwert gegebenenfalls in Abhängigkeit der besonderen Anwendung des erfindungsgemäßen Verfahrens festlegen.

Der Fachmann kann aufgrund seines Erfahrungsschatzes den ersten Bewegungsbereich durch geeignete geometrische Angaben festlegen.

Es ist auf dem ersten Objekt - wie oben angeführt - die Kamera angebracht. Diese Kamera liefert Bilddaten, welche die Grundlage des erfindungsgemäßen Verfahrens bilden. Es ist unter anderem Ziel des Verfahrens, die das erste Objekt beispielsweise steuernde Person vor einer Kollision mit dem zweiten Objekt zu warnen. Nachdem die Eigenschaften des ersten Objektes im Wesentlichen unverändert bleiben, ist es am sinnvollsten, wenn die für die Durchführung des erfindungsgemäßen Verfahrens notwendigen Eigenschaften des ersten Objektes durch eine einmalige Eingabe festgelegt werden. Dem entsprechend kann der erste Bewegungsbereich durch eine einmalige Eingabe festgelegt werden.

Die hier aufgezeigte Lösung zeichnet sich dadurch aus, dass der erste Bewegungsbereich und/oder der zweite Relativbewegungsbereich objektspezifische Parameter sein können, welche Parameter in das erfindungsgemäße Verfahren eingehen.

Der erste Bewegungsbereich und/oder der zweite Relativbewegungsbereich können auch umgebungsspezifische Parameter umfassen oder berücksichtigen, welche Parameter in das erfindungsgemäße Verfahren eingehen. Es kann die Umgebung um das erste Objekt mittels der ersten Kamera aufgenommen werden, wobei die Kamera auch die Umgebung um das zweite Objekt aufnimmt. Es kann die Umgebung wie beispielsweise der Zustand der Straße wie Unebenheiten, Kanaldeckel et cetera, der Straßenverlauf wie beispielsweise eine Kreuzung, eine Verengung, eine Kurve et cetera klassifiziert werden.

Der erste Bewegungsbereich und/oder der zweite Relativbewegungsbereich können mittels einer Winkelangabe oder eine sonstige geometrische Größe hinreichend genau definiert werden. Die Definition der Winkelangabe kann objektspezifisch nach einer durchgeführten Klassifikation des Objektes erfolgen, wobei unter Berücksichtigung der Klassifizierung der Umgebung die Winkelangabe erhöht oder erniedrigt wird.

Die umgebungsspezifischen Parameter können einen Wahrscheinlichkeitsangabe über die zukünftige erste Positionsänderung und/oder die zukünftige zweite Relativpositionsänderung umfassen. Der erste Bewegungsbereiche und/oder der zweite Relativbewegungsbereich können wiederum als ein Bereich umfassend die mit einer bestimmten Wahrscheinlichkeit auftretenden relevanten Bewegungen sein.

Das diskutierte erfindungsgemäße Verfahren kann gleichsam wie bekannte Verfahren als computerimplementierendes Verfahren ausgeführt werden. Insbesondere computerimplementierende Verfahren können einer Latenz unterliegen, welche Latenz unter anderem durch die eingesetzten Vorrichtungen begründet ist. Das erfindungsgemäße Verfahren kann Verfahren nach dem Stand der Technik umfassen, mittels welchen Verfahren die Latenz ermittelt wird und bei Überschreitung eines Grenzwertes der Latenz ein Hinweis ausgegeben wird.

Das erfindungsgemäße Verfahren kann gleichsam wie die bekannten Verfahren die Ausgabe eines Signals umfassen, wenn ein zweites Objekt detektiert wird, welches zweite Objekt bewegt wird und relativ zum ersten Objekt bewegt wird.

Das erfindungsgemäße Verfahren kann vorsehen, dass in einem angemessenen Vorwarnzeitraum vor einer errechneten Kollision des ersten Objektes und des zweiten Objektes gleich einer Überlagerung der ersten zukünftigen Positionsänderung und der zukünftigen zweiten Relativpositionsänderung ein Alarmsignal ausgegeben wird. Der Fachmann ist in der Lage, die Vorwarnzeit in Abhängigkeit der Geschwindigkeit der Objekte, der üblichen Reaktionszeit einer Person et cetera festzulegen. Der Fachmann kann weiters eine Latenz einer Vorrichtung zur Durchführung des erfindungsgemäßen Verfahrens bei der Wahl der Vorwarnzeit berücksichtigen.

Das erfindungsgemäße Verfahren kann sich ergänzend zu der Definition des Bewegungsbereiches beziehungsweise des Relativbewegungsbereiches in Abhängigkeit der Klassifizierung der abgelaufenen Relativpositionsänderung und/oder der Klassifizierung der Objekte auch dadurch auszeichnen, dass in Abhängigkeit der Wahrscheinlichkeit des Auftretens und des Zeitraumes bis zur errechneten Kollision ein Alarm mit unterschiedlichen Alarmstufen ausgegeben wird.

Es sind von der das Objekt steuernden Person gewollte Relativpositionsänderungen möglich, welche mögliche Relativpositionsänderungen in das erfindungsgemäße Verfahren als eine von der Person gewollte Bandbreite an möglichen Relativpositionsänderungen eingehen. Der Fachmann erkennt, dass diese von der Person gewollten Relativpositionsänderungen im Wesentlichen von der Art des Objektes abhängen und sohin über eine Bestimmung zumindest einer Eigenschaft des Objektes gut erkennbar werden, was im Folgenden diskutiert wird.

Es sind weiters von dem Untergrund beeinflusste Relativpositionsänderungen möglich, welche möglichen Relativpositionsänderungen in das erfindungsgemäße Verfahren als durch den Untergrund beeinflusste Relativpositionsänderungen eingehen. Der Fachmann erkennt, dass diese Relativpositionsänderungen von Art und Beschaffenheit des Untergrundes abhängen, auf welchem Untergrund das Objekt bewegt wird, was bei der Durchführung des erfindungsgemäßen Verfahrens durch die Erkennung zumindest einer Eigenschaft des Objektes und/oder einer Eigenschaft des Untergrundes gut erkennbar ist. Die Eigenschaften des Objektes und/oder die Eigenschaft des Untergrundes kann mittels der Kamera detektiert werden.

Es kann ein Alarmsignal ausgegeben werden, wenn eine zukünftige zweite Relativpositionsänderung und eine zukünftige erste Positionsänderung zu einem Kollisionszeitpunkt Tk einander überlagern.

Es kann ebenso ein Alarmsignal ausgegeben werden, wenn der zweiter Bewegungsbereich und die zukünftige erste Bewegungsänderung zu einem Kollisionszeitpunkt Tk einander überlagern.

Es kann auch ein Alarmsignal ausgegeben werden, wenn der erste Bewegungsbereich und der zweite Relativbewegungsbereich zu einem Kollisionszeitpunkt Tk einander überlagern.

Der Fachmann sieht es als naheliegend an, dass ein Alarmsignal ausgegeben wird, wenn die zukünftige erste Positionsänderung und der zukünftige zweite Relativbewegungsbereich zu einem Kollisionsbereich Tk überlagern. Ebenso kann ein Alarmsignal ausgegeben werden, wenn die zukünftige zweite Relativpositionsänderung und der zukünftige erste Bewegungsbereich zu einem Kollisionsbereich Tk einander überlagern.

Das erfindungsgemäße Verfahren kann sich dadurch auszeichnen, dass das erste Objekt zu dem Zeitpunkt Tv einen ersten Bewegungsbereich aufweist,
wobei der erste Bewegungsbereich die mit einer definierten Wahrscheinlichkeit zu dem Zeitpunkt Tv möglichen Positionsänderungen des ersten Objektes berücksichtigt und
gegebenenfalls ein Alarmsignal ausgegeben wird, wenn der erste Bewegungsbereich und die zweite Relativpositionsänderung gegebenenfalls unter Berücksichtigung eines Bereichssicherheitsfaktors einander überlagern.

Hierzu analog kann das erfindungsgemäße Verfahren umfassen, dass das zweite Objekt zu dem Zeitpunkt Tv einen zweiten Relativbewegungsbereich aufweist,
wobei der zweite Relativbewegungsbereich die mit einer definierten Wahrscheinlichkeit zu dem Zeitpunkt Tv möglichen Relativpositionsänderungen des zweiten Objektes zum ersten Objekt berücksichtigt und
gegebenenfalls ein Alarmsignal ausgegeben wird, wenn der zweite Relativbewegungsbereich und der erste Bewegungsbereich beziehungsweise die erste Positionsänderung gegebenenfalls unter Berücksichtigung eines Bereichssicherheitsfaktors einander überlagern.

Das erfindungsgemäße Verfahren kann sich dadurch auszeichnen, dass
die Klassifizierung des ersten Objektes durch Eingabedaten erfolgt.

Bei einer Bewegung des ersten Objektes in einem üblichen Umfeld begegnet das erste Objekt üblicher Weise einer definierbaren Gruppe von zweiten Objekten mit einer definierbaren Varianz von zweiten Eigenschaften. Die zweiten Objekte der Gruppe von zweiten Objekten können sich durch bestimmte Eigenschaften unterscheiden, welche Eigenschaften vorteilhaft die ausgewählten Eigenschaften bei der Klassifizierung des zweiten Objektes sind.

Das erfindungsgemäße Verfahren kann sich weiters dadurch auszeichnen, dass
die Klassifizierung des zweiten Objektes durch ausgewählte zweite Eigenschaften erfolgt.

Der Fachmann kann zu einer effizienten Durchführung des erfindungsgemäßen Verfahrens eine zweite Gruppe von zweiten Eigenschaften auswählen, nach welchen zweiten Eigenschaften die mit Hilfe der ersten Kamera erstellten Bilddaten bei einer Detektion eines Objektes zum Erkennen als zweites Objekt und zur Klassifizierung des zweiten Objektes überprüft werden. Die Bilddaten können hierbei mit Hilfe einer hier nicht weiter zu offenbarenden Gruppe von Filtern von neuronalen Netzen analysiert werden. Das erfindungsgemäße Verfahren kann vorsehen, dass den anzuwendenden Filtern aus der Gruppe der möglichen Filter bestimmte Prioritäten zugewiesen werden. Über die Festlegung der Prioritäten der Filter können einzelne Filter mit unterschiedlichen Wichtigkeiten auf das Klassifikationsergebnis aktiv oder inaktiv gesetzt werden.

Das Zuweisen der Prioritätsfaktoren zu den jeweiligen Filtern erfolgt in Abhängigkeit der zu erwartenden Situation. Üblicher Weise treten bestimmte Situationen an bestimmten Orten auf, weshalb das erfindungsgemäße Verfahren vorsehen kann, dass die Zuweisung der Prioritäten zu den Filtern in Abhängigkeit der mittels GPS-Verfahren bestimmbaren Position des ersten Objektes erfolgt.

Das erfindungsgemäße Verfahren kann die Bilddaten dahingehend überprüfen, ob ein in den Bilddaten als zweites Objekt zu detektierendes Objekt eine Objektgeschwindigkeit und Objektrelativpositionsänderung aufweist, welche Objektgeschwindigkeit von der ersten Objektgeschwindigkeit des ersten Objektes unterschiedlich und welche Objektrelativpositionsänderung zu der ersten Objektrelativpositionsänderung gerichtet ist. Hierdurch wird die Analyse der Bilddaten dahingehend eingeschränkt, dass nur bewegte Objekte als zweite Objekte betrachtet werden.

Gemäß der obigen Beschreibung basiert das erfindungsgemäße Verfahren darauf, dass zu einem Zeitpunkt Tv die vergangene, zu den Zeitpunkten t1..tn stattgefundene Relativpositionsänderung ermittelt wird und hieraus eine zukünftige, zu einem Zeitpunkt T1...N stattfindende Relativpositionsänderung unter der Annahme der Ähnlichkeit der vergangenen Relativpositionsänderung und der zukünftigen Relativpositionsänderung und unter Berücksichtigung von Bandbreiten ermittelt wird. Bei der Berücksichtigung von Bandbreiten können Bewegungsbereiche ermittelt werden.

Das erfindungsgemäße Verfahren kann auch den Schritt umfassen, dass die ermittelte zukünftige zweite Relativpositionsänderung und/oder der ermittelte zukünftige zweite Relativbewegungsbereich dahingehend überprüft wird, ob die ermittelte zukünftige zweite Relativpositionsänderung aufgetreten ist und/oder der ermittelte zukünftige zweite Relativbewegungsbereich die tatsächliche Bewegung umfasst. Das erfindungsgemäße Verfahren kann umfassen, dass die zu dem Zeitpunkt Tv ermittelte Positionsänderung und/oder Relativpositionsänderung und/oder der zu dem Zeitpunkt Tv ermittelte Bewegungsbereich und/oder Relativbewegungsbereich zu einem dem Zeitpunkt Tv nachfolgenden Zeitpunkt Tv+1 mit der tatsächlich gemessenen Relativpositionsänderung verglichen werden.

Das erfindungsgemäße Verfahren kann hierzu umfassen, dass die zu einem Zeitpunkt Tv berechneten zukünftigen Relativpositionsänderungen mit den zu einem Zeitpunkt Tv+1 ermittelten Relativpositionsänderungen und/oder
die zu einem Zeitpunkt Tv berechneten zukünftigen Relativpositionen des zweiten Objektes mit den zu einem Zeitpunkt Tv+1 ermittelten Relativpositionen des zweiten Objektes verglichen werden.

Das erfindungsgemäße Verfahren kann umfassen, dass die zum Zeitpunkt Tv+1 ermittelte Positionsänderung und/oder Relativpositionsänderung gegebenenfalls mitsamt einer Klassifizierung des Objektes in der Datenbank abgespeichert wird. Diese Daten umfassend die Positionsänderung und/oder Relativpositionsänderung mitsamt gegebenenfalls einer Klassifizierung des Objektes können um eine Ortsangabe ergänzt werden. Das erfindungsgemäße Verfahren kann sich sohin dadurch auszeichnen, dass die Datenbank, mittels welcher Datenbank die oben beschriebenen Klassifizierungen durchgeführt werden, laufend erweitert werden.

Die ermittelten Relativpositionsänderungen und die berechneten Positionsänderungen sowie ggf. die Klassenzugehörigkeit des zweiten Objektes können in einer Datenbank abgespeichert werden.

Das erfindungsgemäße Verfahren kann selbstlernende Routinen umfassen. Beispielsweise können nach der Lehre der künstliche Intelligenz auf Basis der ermittelten Daten aus Bilddaten, Positionen, Positionsänderungen et cetera Eigenschaften zugeschrieben werden, welche Eigenschaften unter Verweis auf die obige Diskussion des erfindungsgemäßen Verfahrens dazu verwendet werden können, die zukünftigen zweiten Relativpositionsänderungen und/oder die zukünftigen Bewegungsbereiche hinreichend genau und gegebenenfalls mit einer mit der Anzahl der Wiederholung des erfindungsgemäßen Verfahrens steigenden Genauigkeit abzuschätzen.

Die ersten Positionen des ersten Objektes mittels GPS bestimmt werden.

Das erfindungsgemäße Verfahren kann sich dadurch auszeichnen, dass das erste Objekt einen Bildschirm zur Anzeige eines durch die erste Kamera erstellten Bildes umfasst, in welchem Bildschirm das zweite Objekt bei einem Alarmsignal vergrößert oder mit einer Markierung dargestellt ist.

Die vergrößerte Darstellung des zweiten Objektes bei einem Alarmsignal kann auch umfassen, dass eine das zweite Objekt aufnehmende Kamera aus einer Vielzahl von Kameras ausgewählt wird.

Es kann auch ein Abstand zwischen der zukünftigen ersten Position des ersten Objektes und der zukünftigen Relativposition des zweiten Objekts ermittelt wird und in Abhängigkeit des Abstandes das zweite Objekt auf dem Bildschirm vergrößert oder mit einer Markierung dargestellt ist.

Das erfindungsgemäße Verfahren wird in Ergänzung zu der obigen Beschreibung anhand der folgenden möglichen Ausführungsformen diskutiert. Die möglichen Ausführungsformen sind in den nachstehenden Figuren veranschaulicht. Der Fachmann ist in der Lage die im Folgenden unter Verweis auf die Figuren beschriebenen Ausführungsformen untereinander oder eine Ausführungsform mit der obigen Beschreibung zusammenzuschauen.
Figur 1 zeigt eine mögliche Ausführungsform des erfindungsgemäßen Verfahrens, welche Ausführungsform bei der Ermittlung der Relativposition von zwei Fahrrädern zur Anwendung kommt.
Figur 2 zeigt eine weitere mögliche Ausführungsform des erfindungsgemäßen Verfahrens, welche Ausführungsform bei der Ermittlung der Relativposition eines Lastkraftwagens und eines Fahrrades zur Anwendung kommt.
Figur 3 veranschaulicht das Ablaufschema bei der Erkennung eines zweiten Objektes bei Anwendung des erfindungsgemäßen Verfahrens.
Figur 4 zeigt eine weitere Anwendung des erfindungsgemäßen Verfahrens.
Figur 5 zeigt eine weitere Anwendung des erfindungsgemäßen Verfahrens.
Figur 6 zeigt eine weitere Ausführungsform des erfindungsgemäßen Verfahrens.

Die in den Figuren gezeigten Ausführungsformen zeigen lediglich mögliche Ausführungsformen, wobei an dieser Stelle bemerkt sei, dass die Erfindung nicht auf diese speziell dargestellten Ausführungsvarianten derselben eingeschränkt ist, sondern auch Kombinationen der einzelnen Ausführungsvarianten untereinander und eine Kombination einer Ausführungsform mit der oben angeführten allgemeinen Beschreibung möglich sind. Diese weiteren möglichen Kombinationen müssen nicht explizit erwähnt sein, da diese weiteren möglichen Kombinationen aufgrund der Lehre zum technischen Handeln durch gegenständliche Erfindung im Können des auf diesem technischen Gebiet tätigen Fachmannes liegen.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsformen können für sich eigenständige erfinderische Lösungen darstellen. Die den eigenständigen erfinderischen Lösungen zugrundeliegende Aufgabe kann der Beschreibung entnommen werden.

In den Figuren sind die folgenden Elemente durch die vorangestellten Bezugszeichen gekennzeichnet:
- 1: gemessene Position erstes Objekt Tv=T1
- 2: berechnete Position erstes Objekt T2
- 3: gemessene Relativposition zweites Objekt t1
- 4: gemessene Relativposition zweites Objekt t2
- 5: berechnete Relativposition zweites Objekt Tv=T1
- 6: berechnete Relativposition zweites Objekt T2
- 7: gemessene Relativposition zweites Objekt T2
- 8: gemessene Position erstes Objekt t=1
- 9: gemessene Position erstes Objekt t=2
- 10: abgelaufene Relativpositionsänderung (t1→t2) des ersten Objektes
- 11: abgelaufene Relativpositionsänderung (t1→t2) des zweiten Objektes
- 12: zukünftige berechnete Relativpositionsänderung (T1→T2) des zweiten Objektes
- 13: ermittelte tatsächliche Relativpositionsänderung (T1→T2) des zweiten Objektes
- 14: zukünftige Bewegungsrichtung (T1→T2) des ersten Objektes
- 15: erster Bewegungsbereich erste Objekt T1→T2
- 16: zweiter Bewegungsbereich zweites Objekt T1→T2
- 17: Umgebungsbereich
- 18: Umgebungsabstand
- 19: (frei)
- 20: ersten Objekt
- 21: zweites Objekt
- 22: Vorwärts-Kamera
- 23: Rückwärts-Kamera
- 24: erstes Kamerafeld erste Kamera
- 25: zweites Kamerafeld zweite Kamera
- Tk: Kollisionszeitpunkt
- Tv: Zeitpunkt Durchführung erfindungsgemäßes Verfahren
- 11... n: abgelaufene Zeitpunkte
- T1... n: zukünftige Zeitpunkte

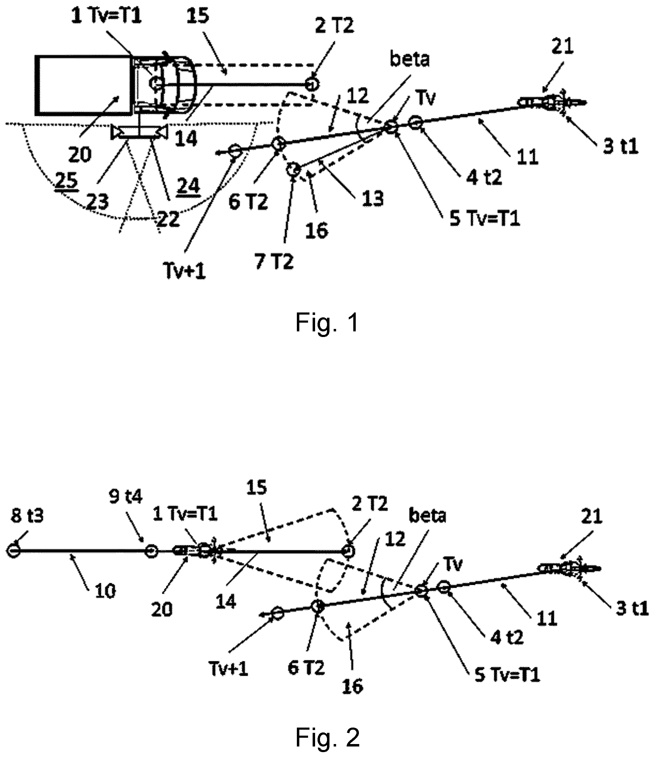

Figur 1 veranschaulicht eine mögliche Ausführungsform des erfindungsgemäßen Verfahrens zum Anzeigen und/oder Berechnen einer Relativbewegung eines zweiten bewegten Objektes 2, 3, 4, 5, 6 zu einem ersten bewegten Objekt 1.

Das erste Objekt 20 ist ein Lastkraftwagen, welcher Lastkraftwagen von einer in dem Lastkraftwagen verweilenden Person in eine erste Positionsänderung 15 von einer Position 1 zu einem Zeitpunkt Tv=T1 zu einer Position 2 zu einem Zeitpunkt T2 bewegt wird.

Das zweite Objekt 21 ist ein Fahrrad, welches Fahrrad von einer auf dem Fahrrad verweilenden weiteren Person in eine zweite Relativpositionsänderung von der Position 3 zu den Positionen 4 bis 6 bewegt wird.

Das erste Objekt 20 umfasst eine Kameraanordnung mit einem Kamerafeld. Die Kameraanordnung umfasst eine Vorwärts-Kamera 22 mit einem ersten Kamerafeld 24 und eine Rückwärts-Kamera 23 mit einem zweiten Kamerafeld. Die erste Kamera kann beispielsweise auf dem Lastkraftwagen angeordnet sein. Es ist im Rahmen der Diskussion dieser Ausführungsform des erfindungsgemäßen Verfahrens die genaue Anordnung der ersten Kamera am ersten Objekt 20 ohne Einfluss, sofern die erste Kamera so angeordnet ist, dass das zweite Objekt 21 mit der ersten Kamera aufnehmbar ist und mit der ersten Kamera die Relativposition des zweiten Objektes 21 zu dem ersten Objekt 20 zu zumindest zwei Zeitpunkten t1...tn ermittelbar ist.

Die Vorrichtung zur Datenverarbeitung zur Durchführung des erfindungsgemäßen Verfahrens ist im ersten Objekt 20 angeordnet. Die Klassifizierung des ersten Objektes 20 geschieht über Eingabedaten.

Üblicher Weise nähert sich das erste Objekt 20 dem zweiten Objekt 21 von hinten, was impliziert, dass das erste Objekt 20 mit einer ersten Geschwindigkeit größer als die zweite Geschwindigkeit des zweiten Objektes bewegt wird. Die weitere Person als Teil des zweiten Objektes 21 kann das herannahende erste Objekt 20 nicht oder nur schlecht beobachten.

Im Rahmen der Diskussion sei Tv der Zeitpunkt, zu welchem Zeitpunkt Tv das erfindungsgemäße Verfahren durchgeführt wird. Das erste Objekt 20 kann zum Zeitpunkt Tv - im globalen Koordinatensystem gesehen - bewegt sein oder an der ersten Position 1 stehen. Das zweite Objekt 21 kann zum Zeitpunkt Tv relativ zum ersten Objekt 20 bewegt sein oder ebenso stillstehen.

Die Figur 1 widerspiegelt im täglichen Leben typische Situationen. Eine typische Situation ist, dass sich ein Lastkraftwagen als ein erstes Objekt einem bewegten oder stillstehenden einspurigem Fahrzeug als ein zweites Objekt nähert. Weiters kann das einspurige Fahrzeug als zweites Objekt seitlich an dem stehenden oder langsam bewegten Lastkraftwagen vorbeifahren. Allenfalls kann die Situation derart sein, dass das einspurige Fahrzeug leicht von der den Lastkraftwagen steuernden Person übersehen werden kann. Die den Lastkraftwagen steuernde Person kann den Lastkraftwagen als erstes Objekt 20 so lenken, dass der Lastkraftwagen als erstes Objekt 20 mit dem einspurigen Fahrzeug als zweites Objekt 21 kollidiert. Die hier offenbarte Erfindung stellt sich die Aufgabe, eine Kollision des ersten Objektes 20 mit dem zweiten Objekt 21 zu unterbinden.

Die Figur 1 umfasst eine Kreismarkierung der Position 1, in welcher Position 1 sich das erste Objekt 20 zum Zeitpunkt Tv befindet, wobei bei dem in Figur 1 veranschaulichten Zeitpunkt Tv dieser gleich dem Zeitpunkt T1 ist. Das erste Objekt 20 wird entlang der ersten Positionsänderung 14 zu der Position 2 zu einem Zeitpunkt T2 bewegt. Es wird angenommen, dass die erste Positionsänderung 14 durch Objektdaten wie Fahrzeugdaten, Telemetriedaten des Lastkraftwagens hinreichend genau bestimmbar ist. Die erste Positionsänderung 14 ist alternativ oder ergänzend hierzu auch mittels GPS-Verfahren bestimmbar.

Weiters kennzeichnet die Kreismarkierung die Position 5, in welcher Position 5 sich das zweite Objekt 21 zum Zeitpunkt Tv befindet, wobei der Zeitpunkt Tv dem Zeitpunkt T1 entspricht. Die Zeitpunkte t1 und t2 sind definitionsgemäß Zeitpunkte vor Tv. Die Positionen 2, 3 zum Zeitpunkt t1 beziehungsweise t2 betreffen somit vergangene Positionen der abgelaufenen Relativpositionsänderung 11 des zweiten Objektes 21. Die Zeitpunkte T1 und T2 betreffen im Vergleich zum Zeitpunkt Tv zukünftige Zeitpunkte. Die betreffenden Positionen 5, 6 zum Zeitpunkt T1 beziehungsweise T2 betreffen im Vergleich zum Zeitpunkt Tv eine zukünftige Relativpositionsänderung 12 des zweiten Objektes 21.

Es ist sohin zum Zeitpunkt Tv eine zeitlich abgelaufene Relativpositionsänderung 11 der Relativpositionen 2, 3 des zweiten Objektes 21 zu dem Zeitpunkt Tv ermittelbar. Die zum Zeitpunkt Tv abgelaufene Relativpositionsänderung 11 ist die Differenz zwischen der Relativposition 2 des zweiten Objektes 21 zu einem Zeitpunkt t1 und der Relativposition 3 des zweiten Objektes 21 zu einem Zeitpunkt t2. Es sind die Relativposition 2 und die Relativposition 3 mittels Koordinaten hinreichend genau angebbar, welche Koordinaten unter Anwendung von Verfahren nach dem Stand der Technik mittels der ersten Kamera ermittelbar sind.

Das erfindungsgemäße Verfahren kann sich dadurch auszeichnen, dass sowohl die Koordinaten in der Ebene der ersten Kamera als auch Weltkoordinaten verwendbar sind. Ergänzend sei festgehalten, dass zur Ermittlung der Weltkoordinaten die Weltkoordinaten des ersten Objektes und hieraus die Weltkoordinaten des zweiten Objektes durch Verfahren nach dem Stand der Technik bestimmbar sind. Die Weltkoordinaten des ersten Objektes können unter Anwendung eines GPS-Systems ermittelt werden.

Es ist die abgelaufene Relativpositionsänderung 11 aus der Positionsänderung von der Position 3 zu der Position 4 errechenbar. Bei dem in Figur 1 gezeigten Ausführungsbeispiel sind zum Zeitpunkt Tv nur die abgelaufenen Positionen 3, 4 bekannt, weshalb sich bei dem hier diskutierten Ausführungsbeispiel die Frage der Auswahl der Zeitspanne vor Tv nicht stellt.

Das erfindungsgemäße Verfahren basiert auf der Annahme, dass sich das zweite Objekt 21 nach dem Zeitpunkt Tv ähnlich bewegt, wie sich das zweite Objekt 21 vor dem Zeitpunkt Tv bewegte. Die Annahme der ähnlichen Bewegung betrifft eine ähnliche Geschwindigkeit und eine ähnliche Relativrichtung. Aus diesem Grund entspricht die zukünftige Relativpositionsänderung 12 des zweiten Objektes 21, welche zukünftige Relativpositionsänderung 12 von der Position 5 zum Zeitpunkt T1 zu der Position 6 zum Zeitpunkt T2 abläuft, der abgelaufenen zweiten Relativpositionsänderung 11, wobei die fortschreitende Bewegung des zweiten Objektes 21 zu beachten ist. Wie aus der Figur 1 ersichtlich ist, entspricht die Position 5 zum Zeitpunkt Tv der Position zum Zeitpunkt T1, da von der Position 5 die zukünftige Relativpositionsänderung 12 zu der Position 6 zum Zeitpunkt T2 auftritt.

Das erfindungsgemäße Verfahren kann einen Abgleich der ersten Relativpositionsänderung 15 des ersten Objektes mit der zukünftigen Relativpositionsänderung 12 umfassen. Es wird im ersten Objekt 20 ein Alarmsignal ausgegeben, wenn die zukünftige Relativpositionsänderung 12 und eine erste Positionsänderung 15 zu einem Kollisionszeitpunkt Tk einander überlagern. Figur 1 zeigt, dass die erste Relativpositionsänderung 15 und die zukünftige Relativpositionsänderung 12 zu keinem Kollisionszeitpunkt Tk einen Schnittpunkt aufweisen, weshalb auf Basis der Überlagerung der ersten Relativpositionsänderung 15 und der Relativpositionsänderung 12 kein Alarmsignal ausgegeben wird.

Es entspricht jedoch keinesfalls der Realität, dass sie Objekte ausschließlich in unveränderte Richtungen bewegen. Eine Richtungsänderung eines Objektes, wie in Figur 1 am Beispiel eines Fahrrades als zweites Objekt 21 kann unvorhersehbar und rasch erfolgen.

Es kann das zweite Objekt 21 zu und/oder nach dem Zeitpunkt Tv seine zweite Relativpositionsänderung ändern. Es wird zu dem Zeitpunkt Tv für das zweite Objekt 21 ein zweiter Relativbewegungsbereich 16 definiert, welcher Relativbewegungsbereich 16 diese möglichen Richtungsänderungen der zweiten Relativpositionsänderung 12 unter Berücksichtigung der Wahrscheinlichkeit des Auftretens der Richtungsänderungen berücksichtigt. Weiters wird durch den zweiten Relativbewegungsbereich 16 in Ergänzung zu einer möglichen zweiten Relativpositionsänderung auch die Breite des Fahrrades als zweites Objekt 21 berücksichtigt.

Das erfindungsgemäße Verfahren kann sich dadurch auszeichnen, dass die vergangene zweite Relativpositionsänderung 11 unter Anwendung von Verfahren nach der gängigen Lehre klassifiziert wird. Es wird hierbei die ermittelte abgelaufene zweite Relativpositionsänderung 11 mit in einer Datenbank abgespeicherten zweiten Referenzrelativpositionsänderungen abgeglichen und auf Basis einer Ähnlichkeit der abgelaufenen zweiten Relativpositionsänderung 11 und zumindest einer zweiten Referenzrelativpositionsänderungen ein zweiter Relativbewegungsbereich 16 ermittelt. Der Fachmann versteht, dass in der Datenbank zumindest zu jeder zweiten Referenzrelativpositionsänderung ein zweiter Referenzrelativbewegungsbereich abgespeichert ist, wobei aus einer Vielzahl von abgespeicherten Referenzrelativbewegungsbereichen zumindest ein Referenzrelativbewegungsbereich auf Basis einer Ähnlichkeit zwischen der Referenzrelativpositionsänderung und der abgelaufenen zweiten Relativpositionsänderung ermittelt wird.

Das erfindungsgemäße Verfahren kann sich auch dadurch auszeichnen, dass zweite Objekt 21 klassifiziert wird. Es werden hierbei die Bilddaten des zweiten Objektes 21 mit in der Datenbank abgespeicherten Referenzbilddaten von zweiten Referenzobjekten abgeglichen und auf Basis einer Ähnlichkeit zwischen dem zweiten Objekt 21 und zweiten Referenzobjekt dem klassifizierten zweiten Objekt 21 ein zweiter Relativbewegungsbereich 16 zugewiesen wird, welcher zweiter Relativbewegungsbereich 16 mit dem zweiten Referenzobjekt in der Datenbank hinterlegt ist.

Bei dem in Figur 1 gezeigten Ausführungsbeispiel wird der abgelaufenen zweiten Relativpositionsänderung 11 beziehungsweise dem zweiten Objekt 21 der durch einen Winkel beta hinreichend genau beschreibbare zweiten Relativbewegungsbereich 16 zugewiesen. Der Winkel beta kann bei dem in Figur 1 dargestellten Ausführungsbeispiel, in welchem Ausführungsbeispiel das zweite Objekt 21 ein Fahrrad ist, 20° betragen. Der zweite Relativbewegungsbereich 11 kann auch alternativ oder ergänzend zu der Definition mittels des Winkels beta auch als ein Bereich umfassend die zukünftigen zweiten Relativbewegungen 12 mit einer definierten Wahrscheinlichkeit definiert sein.

Das erste Objekt 20 kann zu und/oder nach dem Zeitpunkt Tv seine erste Positionsänderung 14 ändern. Zur Berücksichtigung der möglichen ersten Positionsänderungen 14 wird ein erster Bewegungsbereich 15 definiert, wobei möglichen ersten Positionsänderungen 14 mit einer definierten Wahrscheinlichkeit berücksichtigt werden. Bei dem in Figur 1 gezeigten Ausführungsbeispiel wird angenommen, dass der Lastwagen als erstes Objekt 1 im Wesentlichen keine Richtungsänderung vornimmt. Der erste Bewegungsbereich 15 wird so definiert, dass durch den ersten Bewegungsbereich neben einer möglichen, hier zu vernachlässigenden Positionsänderung die Breite des ersten Objektes 1 berücksichtigt ist.

Der erste Bewegungsbereich 15 und der zweite Bewegungsbereich 16 zur Berücksichtigung der möglichen Positionsänderungen können aufgrund von in der Datenbank abgespeicherten statistischen

Größen oder in der Datenbank abgespeicherten Referenzbewegungsprofilen festgelegt werden. Der erste Bewegungsbereich 15 und der zweite Bewegungsbereich 16 zur Berücksichtigung der Breiten des ersten Objektes 20 beziehungsweise des zweiten Objektes 21 werden in Bezugnahme auf die Eigenschaften des jeweiligen Objektes 20, 21 festgelegt.

Der ersten Bewegungsbereich 15 kann sohin die Summe aus der möglichen ersten Positionsänderungen 14 und der Breite des ersten Objektes 20 sein. Der zweite Bewegungsbereich 16 kann sohin aus der Summe der möglichen zweiten Relativpositionsänderungen 12 und der Breite des zweiten Objektes 21 gebildet sein.

Zur Erhöhung der Sicherheit werden die Bewegungsbereiche 15, 16 abgeglichen. Figur 1 zeigt, dass die Bewegungsbereiche 15, 16, welche Bewegungsbereiche 15, 16 die mit einer definierten Wahrscheinlichkeit möglichen Relativpositionsänderungen des ersten Objektes 20 und des zweiten Objektes 21 berücksichtigen, überschneiden, weshalb eine Kollision der Objekte 20, 21 möglich ist. Es wird sohin ein Alarmsignal ausgegeben. Zur Erhöhung der Sicherheit können die Bewegungsbereiche 15, 16 mittels Sicherheitsfaktoren vergrößert werden, was in Figur 1 zur Wahrung der Übersichtlichkeit nicht dargestellt ist.

Die zu einem Zeitpunkt Tv ermittelten zukünftigen Relativpositionsänderungen 12 von der Position 5 zu der Position 6 sind zu einem Zeitpunkt Tv+1 abgelaufene und somit tatsächlich geschehene Relativpositionsänderungen 13 von der Position 5 zu der Position 7, wobei der Zeitpunkt Tv+1 dem Zeitpunkt Tv nachfolgt. Das erfindungsgemäße Verfahren umfasst, dass zu dem Zeitpunkt Tv+1 die tatsächlich erfolgten Relativpositionsänderungen 13 ermittelt werden und diese mit der zum Zeitpunkt Tv errechneten Relativpositionsänderungen 12 verglichen werden. Es wird die Abweichung zwischen den Relativpositionsänderungen 12 und den Relativpositionsänderungen 13 in einer Datenbank abgespeichert.

Es können die GPS-Daten des ersten Objektes 20 ermittelt und in der Datenbank abgespeichert werden.

Es ist in Figur 1 weiters eine mögliche Kameraanordnung eingetragen. In den weitern Figuren ist die Kameraanordnung zur Wahrung der Übersichtlichkeit nicht eingetragen.

Die Kameraanordnung umfasst eine Vorwärts-Kamera 22 und eine Rückwärts-Kamera 23. Die erste Kamera 22 ist entgegen der Bewegungsrichtung 15 des ersten Objektes 20 gerichtet, während die zweite Kamera 23 in Bewegungsrichtung 15 des ersten Objekts 20 gerichtet ist. Das erste Kamerafeld 24 der ersten Kamera 22 und das zweite Kamerafeld 25 der zweiten Kamera 23 bilden den gesamten Bereich seitlich zu dem ersten Objekt 20 ab. In Figur 1 ist beispielhaft die Anordnung der Kameras 22, 23 mit überschneidenden Kamerafeldern 24, 25 eingetragen.

Der Lastkraftwagen als erstes Objekt 20 kann einen Bildschirm umfassen, auf welchem Bildschirm das mittels der Vorwärts-Kamera 22 und/oder mittels der Rückwärts-Kamera 23 aufnehmbare zweite Objekt 21 angezeigt werden kann. Die Anzeige des zweiten Objektes 21 auf dem Bildschirm kann derart sein, dass das zweite Objekt 21 in Abhängigkeit einer möglichen Kollision zwischen dem ersten Objekt 20 und dem zweiten Objekt 21, insbesondere in Abhängigkeit der Wahrscheinlichkeit einer solchen Kollision vergrößert und/oder mit einer Markierung versehen dargestellt werden kann. Die Anzeige des zweiten Objektes 21 auf dem Bildschirm und/oder die Vergrößerung der Anzeige des zweiten Objektes 21 und/oder die Markierung des zweiten Objektes 21 auf dem Bildschirm kann auch in Abhängigkeit des Abstandes zwischen dem ersten Objekt 20 und dem zweiten Objekt 21 erfolgen.

Figur 2 veranschaulicht eine weitere Ausführungsform des erfindungsgemäßen Verfahrens, welche weitere Ausführungsform ähnlich ist zu der in Figur 1 dargestellten Ausführungsform. Die in Figur 2 dargestellte Ausführungsform unterscheidet sich von der in Figur 1 dargestellten Ausführungsform in der Bestimmung der ersten Positionsänderung des ersten Objektes.

Es wird zu einem Zeitpunkt t3 eine erste Position 8 des ersten Objektes 1 bestimmt. Weiters wird zu einem Zeitpunkt t4 eine erste Position 9 des ersten Objektes 1 bestimmt. Die Bestimmung der Position erfolgt unter Anwendung von GPS-Technologien nach dem Stand der Technik. Aus der ersten Position 8 und der ersten Position 9 wird eine abgelaufene erste Positionsänderung 10 ermittelt, aus welcher abgelaufenen ersten Positionsänderung 10 eine zukünftige erste Positionsänderung 14 beginnend zu dem Zeitpunkt T1=Tv ermittelbar ist. Hieraus ist auch die zukünftige erste Position 2 zu dem Zeitpunkt T2 bestimmbar.

Bei dem in Figur 2 dargestellten Ausführungsbeispiel wird eine mögliche Kollision von zwei Fahrrädern als zwei Objekte 20, 21 betrachtet. Es wird der Bewegung beider Objekte 20, 21 ein erster Bewegungsbereich 15 beziehungsweise ein zweiter Relativbewegungsbereich 16 zugewiesen. Der Bewegungsbereich 15 und der zweite Relativbewegungsbereich 16 werden auf Basis einer Klassifizierung des ersten Objektes 20 beziehungsweise des zweiten Objektes 21 erstellt.

Die Klassifizierung des ersten Objektes 20 kann über Eingabedaten erfolgen. Diese Eingabedaten können beispielsweise betreffen, dass das erste Objekt 20 ein Fahrrad ist. Es ist in einer Datenbank ein erster Bewegungsbereich 15 hinterlegt, welcher erster Bewegungsbereich 15 charakteristisch für das klassifizierte Objekt 20 ist.

Alternativ oder ergänzend hierzu kann die ermittelbare erste Positionsänderung 10 klassifiziert werden.

Es wird hierbei die ermittelte erste Positionsänderung 10 mit zumindest einer ersten Referenzpositionsänderung, welche erste Referenzpositionsäderung in einer Datenbank abgespeichert ist, abgeglichen. Es wird ein erster Referenzbewegungsbereich als erster Bewegungsbereich 15 der ersten Positionsänderung 10 beziehungsweise dem ersten Objekt 20 zugewiesen. Der Fachmann erkennt, dass durch die Klassifizierung der ersten Positionsänderung 10 eine wesentliche genauere Abschätzung einer zukünftigen ersten Positionsänderung 14 möglich ist. Dementsprechend kann auch der erste Bewegungsbereich 15 genauer ermittelt werden, wodurch Fehleinschätzungen einer möglichen Kollision vermieden werden können.

Das erste Objekt 20 umfasst eine Kamera (in Figur 2 nicht eingetragen), mittels welcher Kamera das zweite Objekt 21 aufgenommen werden kann. Die Kamera erstellt Bilddaten, mittels welcher Bilddaten das zweite Objekt 21 unter Anwendung der gängigen Lehre klassifiziert werden kann.

Es kann das zweite Objekt 21 mit zumindest einem in einer Datenbank hinterlegten zweiten Referenzobjekt abgeglichen werden, welchem zweiten Referenzobjekt ein zweiter Referenzbewegungsbereich zugewiesen ist. Auf Basis einer Ähnlichkeitsanalyse von zweiten Objekt 21 und zweitem Referenzobjekt wird dem zweiten Relativebewegungsbereich 16 ein zweiter Referenzbewegungsbereich zugewiesen. Diese Zuweisung erfolgt - gleichsam wie bei einer ausschließlichen Klassifizierung des ersten Objektes - ausschließlich auf Basis der Eigenschaften des zweiten Objektes 21 beziehungsweise in der Datenbank abgespeicherten Eigenschaften des zweiten Referenzobjektes.

Die Erfindung stellt sich auf die Aufgabe, die aktuellen Eigenschaften des zweiten Objektes, d.h. die zwischen dem Zeitpunkt t1 und dem Zeitpunkt Tv ermittelbaren Eigenschaften zu berücksichtigen.

Es ist unter Anwendung der gängigen Lehre die Position 3 des zweiten Objektes 21 zum Zeitpunkt t1 und die Position 5 des zweiten Objektes 21 zum Zeitpunkt t2 aus den Bilddaten ermittelbar. Es ist auch die zweite abgelaufene Relativpositionsänderung 11 ermittelbar und unter Anwendung der gängigen Lehre klassifizierbar. Es wird hierbei die zweite abgelaufene Relativpositionsänderung 11 mit zumindest einer zweiten Referenzrelativpositionsänderung verglichen. Es ist in einer Datenbank zu einer zweiten Referenzrelativpositionsänderung ein zweiter Referenzbewegungsbereich hinterlegt. Unter Bestimmung eines Ähnlichkeitsmaßes zwischen der abgelaufenen zweiten Relativpositionsänderung und den zweiten Referenzrelativpositionsänderungen wird dem zweiten Bewegungsbereich 16 eine zweiter Referenzbewegungsbereich zugewiesen und so die Größe des zweiten Relativbewegungsbereiches 16 ermittelt. Üblicher Weise kann die Festlegung der Größe des zweiten Relativbewegungsbereiches 16 über die Festlegung eines Winkels beta erfolgen, zumal angenommen werden kann, dass der Geschwindigkeitsunterschied zwischen dem ersten Objekt 20 und dem zweiten Objekt 21 sich nicht abrupt verändert. Der Fachmann kann auch andere Parameter wie auch oben dargelegt festlegen, um die Größe des zweiten Bewegungsbereiches 16 festzulegen.

In Figur 2 weist der zweite Bewegungsbereich 16 die Form eines Segmentes auf, da angenommen wird, dass der Geschwindigkeitsunterschied zwischen dem ersten Objekt 20 und dem zweiten Objekt 21 in der Zeitspanne T1-T2 und in der Zeitspanne t1-t2 ähnlich ist. Es sind auch andere Formen denkbar, welche andere Formen beispielsweise eine Veränderung des Geschwindigkeitsunterschiedes berücksichtigen.

Eine Analyse des Bewegungsbereiches 15 und des zweiten Relativbewegungsbereiches 16 ergibt, dass der erste Bewegungsbereich 15 und der zweite Relativbewegungsbereich 16 zwar überschneiden, während die erste Positionsänderung 14 und die zweite Relativpositionsänderung 12 keinen Schnittpunkt aufweisen. Im Unterschied zu Verfahren nach dem Stand der Technik liefert das erfindungsgemäße Verfahren eine Kollisionswarnung, während die Verfahren nach dem Stand der Technik keine Kollisionsgefahr ermitteln würden. Die durch das erfindungsgemäße Verfahren ermittelte Kollisionswarnung entspricht dem Sicherheitsgedanken.

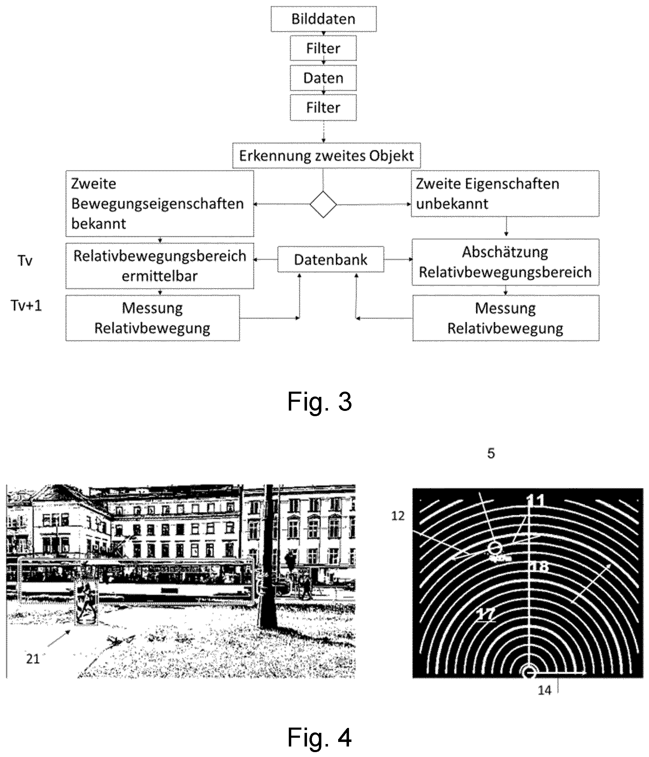

Figur 3 veranschaulicht schematisch den Datenverarbeitungsprozess als Teil des erfindungsgemäßen Verfahrens. Dieser Datenverarbeitungsprozess kann auch unabhängig von dem Anzeigen und/oder Berechnen einer Relativbewegung eines zweiten Objektes zu einem ersten Objekt erfolgen.

Die Bilddaten werden über die erste Kamera aufgenommen. Die erste Kamera ist am ersten Objekt derart angebracht, dass das relativ zum ersten Objekt bewegte zweite Objekt von der Kamera aufgenommen wird. Unter Anwendung von Verfahren nach dem Stand der Technik kann das zweite Objekt 2 aus mit der Kamera erstellten Bilddaten extrahiert werden.

Das erfindungsgemäße Verfahren zeichnet sich dadurch aus, dass zur Erkennung des zweiten Objektes aus den Bilddaten ausgewählte Eigenschaften verwendet werden.

In der Beschreibungseinleitung wird die Anwendung des erfindungsgemäßen Verfahrens zur Erkennung einer Relativbewegung eines zweiten Sportlers zu einem ersten Sportler diskutiert. Es wird in der Beschreibungseinleitung das Beispiel der Schifahrer und das Beispiel der Radfahrer gebracht.

Üblicher Weise tragen Sportler bei der Ausübung Ihres Sportes einen Helm. Ein Helm weist eine zu einer Kugel ähnliche Form auf. Aufgrund dieser ausgewählten geometrischen Eigenschaften ist der Helm und sohin der zweite Sportler gut von den anderen Objekten unterscheidbar.

Es ist in Figur 3 angedeutet, dass unter Anwendung der Lehre neuronaler Netze aus den Bilddaten unter Anwendung von zumindest einem Filter Daten generiert werden, welche Daten unter Angabe einer Wahrscheinlichkeit als ein Hinweis auf ein zweites Objekt interpretiert werden. Derartige neuronale Netze sind nach dem Stand der Technik bekannt und können auch zur Durchführung des erfindungsgemäßen Verfahrens gemäß dem obigen allgemeinen Teil und gemäß der beispielhaft angeführten Ausführungsformen angewandt werden.

Das erfindungsgemäße Verfahren kann umfassen, dass die Anwendung des zumindest einen Filters jeweils mit einem Prioritätsfaktor versehen ist. Durch den zumindest einen Prioritätsfaktor werden die unter Anwendung des jeweiligen Filters gewonnenen Daten als Ergebnis gewichtet. Das erfindungsgemäße Verfahren kann sich dadurch auszeichnen, dass für bestimmte Anwendungen dem zumindest einen Filter jeweils ein definierter Prioritätsfaktor zugewiesen wird, welcher Prioritätsfaktor die besonderen Eigenschaften des zu detektierenden zweiten Objektes berücksichtigt. Diese Zuweisung von definierten Prioritätsfaktoren kann einschließen, dass einem Filter die Priorität Null zugewiesen wird und der Filter sohin keine Veränderung des Datensatzes hervorbringt.

Die definierten Prioritätsfaktoren werden in Lernprozessen definiert.

In der Beschreibungseinleitung wird die Anwendung des erfindungsgemäßen Verfahrens zur Erkennung einer Relativbewegung eines Radfahrers als zweites Objekt zu einem Lastkraftwagen als erstes Objekt diskutiert.

In der Umgebung des ersten Objektes gibt es neben dem bewegten zweiten Objekt nicht bewegte weitere Objekte. Die weiteren Objekte weisen im Unterschied zu dem zweiten Objekt eine weitere Relativgeschwindigkeit zum ersten Objekt auf, welche weitere Relativgeschwindigkeit gleich ist dem Betrag der im globalen Koordinatensystem gemessenen ersten Geschwindigkeit des ersten Objektes. Die zweite Relativgeschwindigkeit des zweiten Objektes unterscheidet sich von dem Betrag der im globalen Koordinatensystem gemessenen ersten Geschwindigkeit des ersten Objektes. Die zweite Geschwindigkeit des zweiten Objektes kann sohin eine ausgewählte zweite Eigenschaft des zweiten Objektes sein.

Wie in der Figur 3 angedeutet wird bei der Durchführung des erfindungsgemäßen Verfahrens ein detektiertes Objekt klassifiziert. Bei der Klassifikation wird erkannt, ob es sich bei dem klassifizierten Objekt beispielsweise um einen Baum, einen Gebäudeteil oder eine Person, ein Fahrrad handelt. Es ist weiteres in der Datenbank hinterlegt, ob das detektierte und klassifizierte Objekt bewegt wird oder sich bewegt, was eine Entscheidungsgrundlage für eine weitere Beobachtung des dekatierten Objektes als zweites Objekt bei der Durchführung des erfindungsgemäßen Verfahrens ist. Das erfindungsgemäße Verfahren ist in erster Linie auf die Beobachtung von bewegten Objekten als zweite Objekte ausgelegt, weshalb detektierte und sich nicht bewegende oder nicht bewegte Objekte nicht weiter beachtet werden können.

Die Klassifizierung des zweiten Objektes kann das Ergebnis haben, dass das zweite Objekt als ein Fahrrad, ein Schifahrer et cetera erkannt wird und sohin die zweiten Bewegungseigenschaften bekannt sind.

Bei bekannten zweiten Bewegungseigenschaften kann der zweite Relativbewegungsbereich in Abhängigkeit der vorhandenen Daten genau festgelegt werden. In Figur 3 ist dies mit dem Block "Relativbewegungsbereich ermittelbar" dargelegt. Die in der Datenbank abgespeicherten zweiten Bewegungseigenschaften umfassen zweite Angaben über die möglichen Richtungsänderungen des zweiten Objektes. Diese zweiten Angaben umfassen eine Winkelangabe als einen das Ausmaß der Richtungsänderung beschreibenden Wert in Abhängigkeit vom fahrdynamischen Wert wie (nicht einschränkend) Geschwindigkeit, Beschleunigung und/oder Eigenschaften des klassifizierten Objektes wie (nicht einschränkend) Größe, Volumen des klassifizierten Objektes und/oder der Wahrscheinlichkeit der Richtungsänderung und/oder der lokalen Gegebenheiten wie (nicht einschränkend) Straßenführung, Eigenschaft des Untergrundes. Auf Basis der zweiten Angaben ist der zweite Relativbewegungsbereich errechenbar. Es ist in Figur 1 und in Figur 2 das Ausmaß der möglichen Richtungsänderung durch den Winkel beta eingetragen. Die Ermittlung des Bewegungsbereiches erfolgt zu dem Zeitpunkt Tv.

Es ist in der Beschreibung zu Figur 1 und Figur 2 erwähnt, dass zu einem Zeitpunkt Tv+1 die zwischen den Zeitpunkten T1, T2 erfolgte Relativpositionsänderung des zweiten Objektes mit bekannten Bewegungseigenschaften gemessen wird. Während bei der Berechnung des zweiten Bewegungsbereiches zum Zeitpunkt Tv die Daten aus der Datenbank gelesen werden, werden nach der erfolgten Messung zum Zeitpunkt Tv+1 die Daten in der Datenbank abgespeichert.

Die Klassifizierung des zweiten Objektes kann auch das Ergebnis haben, dass das zweite Objekt nicht erkannt wird und zu dem zweiten Objekt ein ähnliches zweites Objekt oder eine Gruppe von ähnlichen zweiten Objekten ermittelt wird. Auf Basis der dem ähnlichen zweiten Objekt zugewiesenen zweiten Eigenschaften beziehungsweise auf Basis der der Gruppe von ähnlichen zweiten Objekten zugewiesenen Eigenschaften kann ein zweiter Relativbewegungsbereich abgeschätzt werden.

Analog zu der obigen Beschreibung umfasst das Verfahren den Schritt, dass die tatsächliche Relativbewegung des nicht klassifizierbaren zweiten Objektes zu einem Zeitpunkt TV+1 ermittelt wird und diese tatsächliche Relativbewegung in der Datenbank unter Verknüpfung mit dem nicht klassifizierbaren zweiten Objekt hinterlegt wird.

Figur 4 zeigt eine weitere Anwendung des erfindungsgemäßen Verfahrens. Die Figur 4 umfasst links ein Bild, welches Bild mit einer ersten Kamera aufgenommen wird. Die erste Kamera ist bei diesem Ausführungsbeispiel auf der Seite einer Straßenbahn als erstes Objekt so angeordnet, sodass ein Seitenraum um die Straßenbahn aufgenommen wird. Es ist das Ziel dieser Anordnung der Kamera, den Seitenraum in Hinblick auf zweite Objekte zu überwachen, welche zweite Objekte die Bewegung der Straßenbahn als erstes Objekt kreuzen und mit der Straßenbahn als erstes Objekt kollidieren können.

Das linke Bild in Figur 4 umfasst eine als zweites Objekt markierte weitere Straßenbahn. Die weitere Straßenbahn wird nicht weiter beachtet, da die weitere Straßenbahn hinreichend weit von der Straßenbahn als erstes Objekt entfernt ist. Das erfindungsgemäße Verfahren kann sohin die Definition eines Beobachtungsbereiches umfassen, in welchem Umgebungsbereich Objekte als zweite Objekte beobachtet werden.

Das linke Bild in Figur 4 umfasst eine als zweites Objekt markierte Person 21. Das erfindungsgemäße Verfahren definiert einen Umgebungsbereich als einen Bereich mit einem Beobachtungsabstand zu dem ersten Objekt. Als zweite Objekte erkannte Objekte in diesem Beobachtungsbereich können mit dem ersten Objekt kollidieren.

Die Figur 4 umfasst ein rechtes Bild, in welchem rechten Bild die Relativposition 5 des zweiten Objektes 21 sowie die Relativpositionsänderungen 11, 12 des zweiten Objektes 21 eingetragen sind. Das rechte Bild der Figur 4 ist das Ergebnis der Analyse der Bilddaten des linken Bildes, wobei zur Ermittlung der Bewegungsrichtungen verschiedene Zeitpunkte betrachtet werden. Aus dem rechten Bild der Figur 4 wird klar, dass sich keine Kollision zwischen der Person als zweites Objekt 21 und der Straßenbahn als erstes Objekt ereignet.

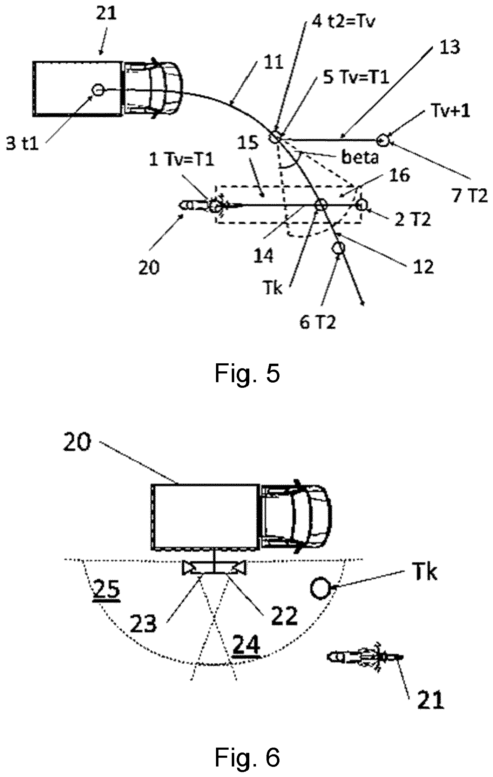

Figur 5 zeigt eine weitere Anwendungsmöglichkeit des erfindungsgemäßen Verfahrens. Es soll überprüft werden, ob eine Kollision zwischen einem einspurigen Fahrzeug wie beispielsweise ein Motorrad als erstes Objekt 20 und einem Lastkraftwagen als zweites Objekt 21 stattfindet. Dieses Anwendungsbeispiel ist den anhand von Figur 1 und Figur 2 diskutierten Anwendungsbeispielen sehr ähnlich.

Das zweite Objekt 21 nähert sich dem ersten Objekt 20 von hinten. Aus den Telemetriedaten des ersten Objektes 20 wird die erste Positionsänderung 14 und gegebenenfalls über eine Klassifizierung wie oben beschrieben der erste Bewegungsbereich 15 ermittelt. Aus der zeitlich abgelaufenen Relativpositionsänderung 11 wird sohin eine zukünftige Relativpositionsänderung 12 und ein Relativbewegungsbereich 15 ermittelt. In Analogie zu der obigen Beschreibung wird die zukünftige zweite Relativpositionsänderung 12 und der zweite Bewegungsbereich ermittelt.

Das erfindungsgemäße Verfahren erkennt, dass die erste Positionsänderung 14 und die zweite Relativpositionsänderung 12 einen gemeinsamen Schnittpunkt Tk sowie der erste Bewegungsbereich 15 und der zweite Relativbewegungsbereich 16 einen Überlappungsbereich aufweisen. Das erfindungsgemäße Verfahren liefert zum Zeitpunkt Tv das Ergebnis der bevorstehenden möglichen Kollision und gibt einen Alarm an die auf dem ersten Objekt 20 verweilende Person aus, welche Person den Lenker das Lastkraftwagen als zweites Objekt 21 durch Hupen warnen kann.

Der Lenker des Lastkraftwagens als zweites Objekt ändert zum Zeitpunkt Tv die Richtung. Das erste Objekt folgt nicht der ermittelten Relativrichtungsänderung 12, sondern der tatsächlichen Relativpositionsänderung 13, welche zum Zeitpunkt Tv+1 tatsächlich ermittelbar ist. Das erfindungsgemäße Verfahren kann Routinen zur Dokumentation in der Datenbank umfassen, dass die Ausgabe eines Alarmes zu einer Richtungsänderung des zweiten Objektes führte.

Figur 6 zeigt eine weitere Ausführungsform des erfindungsgemäßen Verfahrens. Es sind in Figur 6 ein erstes Objekt 20 und ein zweites Objekt 21 dargestellt, wobei eine Kollision unter Anwendung des oben beschriebenen Verfahrens ermittelt wird. Zur Wahrung der Übersichtlichkeit sind in Figur 6 die Positionsänderungen, Relativpositionsänderungen, Bewegungsbereiche nicht dargestellt. Es ist der Ort der Kollision in Figur 6 beispielhaft eingetragen und mit Tk markiert.

Das erste Objekt 20 umfasst eine Kameraanordnung mit einer Vorwärts-Kamera 22 und eine Rückwärts-Kamera 23. Die Vorwärts-Kamera 22 umfasst ein erstes Kamerafeld 24 und die Rückwärts-Kamera 23 ein zweites Kamerafeld 25. Aus den Bilddaten, welche Bilddaten mittels der Kameraanordnung ermittelt werden, ist die Relativposition des zweiten Objektes 21 zum ersten Objekt ermittelbar. Unter Anwendung des oben beschriebenen Verfahrens ist der Kollisionsort zu einem Kollisionzeitpunkt Tk bestimmbar.

Es kann der Kollisionsort mit den Kamerafeldern 24, 25 abgeglichen werden. Dies ist für den Fachmann über eine Betrachtung der Koordinaten durchführbar, was bei dem in Figur 6 dargestellten Ausführungsbeispiel das Ergebnis liefert, dass der Kollisionsort Tk im ersten Kamerafeld 24 liegt. Das Verfahren kann umfassen, dass jene Kamera - hier die Vorwärts-Kamera 22 - ausgewählt wird, welche Kamera das zweite Objekt aufnimmt und/oder welche Kamera eine möglichen zukünftigen Kollisionsort Tk aufnimmt.

Das erste Kamerafeld 25 nimmt nicht Teil des ersten Objektes 20 auf. Der Fahrer des ersten Objektes 20 kann sich aus diesem Grund möglicher Weise schlecht orientieren. Dies kann insbesondere der Fall sein, wenn auf einem Bildschirm das zweite Objekt 20 und/oder der Kollisionsort vergrößert dargestellt ist. Zur besseren Orientierung des Fahrers des ersten Objektes 20 kann das erste Kamerafeld 24 durch Drehen der Vorwärts-Kamera 22 so abgeändert werden, dass neben dem Kollisionsort Tk und/oder dem zweiten Objekt 21 Teile des ersten Objektes 20 am Bildschirm gezeigt werden.

## Patentansprüche

1. Verfahren zum Anzeigen und/oder Berechnen einer Relativbewegung eines zweiten bewegten Objektes (21) zu einem ersten bewegten Objekt (20) und ggf. zum Unterbinden einer Kollision zwischen dem ersten bewegten Objekt (20) und dem zweiten bewegten Objekt (21),
wobei das erste Objekt (20) in eine erste Positionsänderung (10, 14) bewegt wird und das zweite Objekt (21) in eine zweite Relativpositionsänderung (11, 12) bewegt wird,
welches Verfahren zu einem Zeitpunkt Tv durchführbar ist, wobei
zumindest eine erste Kamera (22, 23) mit einem ersten Kamerafeld (24, 25) auf dem ersten Objekt (20) angeordnet ist,
mit welcher Kamera (22, 23) die Relativposition des zweiten Objektes (21), welches zweites Objekt (21) sich im ersten Kamerafeld (24, 25) befindet, zu dem ersten Objekt (20) ermittelbar ist, wobei
zu dem Zeitpunkt Tv das erste Objekt (1, 2) klassifiziert und der erste Bewegungsbereich (15) unter Berücksichtigung der durch die Klassifikation des ersten Objektes (1, 2) zugewiesenen ersten Eigenschaften des ersten Objektes festgelegt wird,
wobei zu dem Zeitpunkt Tv eine zeitlich abgelaufene zweite Relativpositionsänderung (11) des zweiten Objektes (21) von einer Relativposition (3) zu einem Zeitpunkt tl zu einer Relativposition (4) zu einem Zeitpunkt tl+1 ermittelbar ist,
welche zeitlich abgelaufene zweite Relativpositionsänderung (11) als eine Differenz zwischen einer zweiten Relativposition (3) zu einem Zeitpunkt tl und einer zweiten Relativposition (4) zu einem Zeitpunkt tl+ 1 ermittelbar ist, wobei
das zweite Objekt (20) klassifiziert wird und
einer zukünftigen zweiten Relativpositionsänderung (12) des zweiten Objektes (20) von einer zweiten Relativposition (5) zu einem Zeitpunkt Tl zu einer zukünftigen zweiten Relativposition (6) zu einem Zeitpunkt Tn Eigenschaften wie Geschwindigkeit und/oder die zukünftige Richtung der zweiten Relativpositionsänderung auf der Basis einer Klassifizierung des zweiten Objektes (20) zugewiesen wird.

2. Verfahren nach Anspruch 1, **dadurch gekennzeichnet, dass**
die Ähnlichkeit der zweiten Relativpositionsänderung (11) und der zukünftigen zweiten Relativpositionsänderung (12) durch einen zweiten Bewegungsbereich (16) berücksichtigt wird, indem die zweite abgelaufene Relativpositionsänderung des zweiten Objektes klassifiziert wird, wobei der zweite Relativbewegungsbereich (16) unter Berücksichtigung der durch die Klassifizierung der Relativpositionsänderung (11) zugewiesenen Eigenschaften der zukünftigen Relativpositionsänderung (12) festgelegt wird
und/oder
die Eigenschaft des zweiten Objektes klassifiziert wird, wobei
der zweite Relativbewegungsbereich (16) durch die die Klassifizierung des zweiten Objektes zugewiesenen zweiten Eigenschaften des zweiten Objektes zugewiesen wird,
wobei in dem zweiten Relativbewegungsbereich (16) die zukünftige zweite Relativpositionsänderung (12) stattfindet,
wobei die abgelaufene zweite Relativpositionsänderung (11) mit in einer Datenbank abgespeicherten zweiten Referenzrelativpositionsänderungen abgeglichen wird, wobei zumindest zu jeder in der Datenbank abgespeicherten zweiten Referenzrelativpositionsänderung ein zweiter Referenzrelativbewegungsbereich abgespeichert ist, und
wobei aus einer Vielzahl von abgespeicherten Referenzrelativbewegungsbereichen zumindest ein Referenzrelativbewegungsbereich als Relativbewegungsbereich (16) auf Basis einer Ähnlichkeit zwischen der Referenzrelativpositionsänderung und der abgelaufenen zweiten Relativpositionsänderung (11) ermittelt wird.

3. Verfahren nach einem der Ansprüche 1 bis 2, **dadurch gekennzeichnet, dass**
ein Alarmsignal ausgegeben wird, wenn eine zukünftige zweite Relativpositionsänderung (12) und eine zukünftige erste Positionsänderung (14) zu einem Kollisionszeitpunkt Tk einander überlagern, und/oder
das Alarmsignal ausgegeben wird, wenn der zweite Bewegungsbereich (16) und die zukünftige erste Bewegungsänderung (14) zu einem Kollisionszeitpunkt Tk einander überlagern, und/oder
das Alarmsignal ausgegeben wird, wenn der erste Bewegungsbereich (15) und der zweite Relativbewegungsbereich (16) zu einem Kollisionszeitpunkt Tk einander überlagern, und/oder
das Alarmsignal ausgegeben wird, wenn der erste Bewegungsbereiche (15) und die zukünftige zweite Bewegungsänderung (12) zu einem Kollisionszeitpunkt Tk einander überlagern.

4. Verfahren nach Anspruch 2, **dadurch gekennzeichnet, dass**
die Klassifizierung des ersten Objektes durch Eingabedaten erfolgt.

5. Verfahren nach einem der Ansprüche 1 bis 4, **dadurch gekennzeichnet, dass** die Klassifizierung des zweiten Objektes durch ausgewählte zweite Eigenschaften erfolgt.

6. Verfahren nach einem der Ansprüche 1 bis 5, **dadurch gekennzeichnet, dass**
die zu einem Zeitpunkt Tv berechneten zukünftigen Relativpositionsänderungen (12) mit den zu einem Zeitpunkt Tv+1 ermittelten Relativpositionsänderungen (12) und/oder
die zu einem Zeitpunkt Tv berechneten zukünftigen Relativpositionen des zweiten Objektes (5, 6) mit den zu einem Zeitpunkt Tv+1 ermittelten Relativpositionen des zweiten Objektes (5, 6) verglichen werden,
wobei die ermittelten Relativpositionsänderungen und die berechneten Positionsänderungen sowie ggf. die Klassenzugehörigkeit des ersten Objektes (1) beziehungsweise des zweiten Objektes (3, 4, 5, 6) in einer Datenbank abgespeichert werden.

7. Verfahren nach einem der Ansprüche 1 bis 6, **dadurch gekennzeichnet, dass** die GPS-Daten des ersten Objektes ermittelt werden.

8. Verfahren nach einem der Ansprüche 3 bis 7, **dadurch gekennzeichnet, dass**
das zweite Objekt (21) bei einem Alarmsignal in einem Bildschirm vergrößert oder mit einer Markierung dargestellt wird.

9. Verfahren nach einem der Ansprüche 1 bis 8, **dadurch gekennzeichnet, dass**
ein Abstand zwischen der zukünftigen ersten Position (1, 2) des ersten Objektes (20) und der zukünftigen Relativposition (5, 6) des zweiten Objekts (21) ermittelt wird und
in Abhängigkeit des Abstandes das zweite Objekt auf dem Bildschirm vergrößert oder mit einer Markierung dargestellt wird.

10. Vorrichtung zur Datenverarbeitung umfassend Mittel zur Ausführung eines Verfahrens nach einem der Ansprüche 1 bis 9.

11. Computerprodukt umfassend Befehle, welche Befehle bei der Ausführung eines Computerprogramms durch einen Computer diesen oder einen Computer veranlassen, das Verfahren nach einem der Ansprüche 1 bis 9 auszuführen.

12. Computerlesbares Speichermedium umfassend Befehle, welche Befehle bei der Ausführung durch einen Computer diesen oder einen Computer veranlassen, das Verfahren nach einem der Ansprüche 1 bis 9 auszuführen.
